# EUROPEAN PATENT APPLICATION

(11) **EP 4 761 443 A1**
(43) Date of publication of application: **17.06.2026**
(21) Application number: 24851049.7
(22) Date of filing: 07.08.2024
(51) Int. Cl.: H04W 72/40

(54) **METHOD AND APPARATUS FOR SELECTING SIDELINK RESOURCE, AND TERMINAL**

(30) Priority: 10.08.2023 CN 202311011532
(71) Applicant: Vivo Mobile Communication Co., Ltd., Dongguan, Guangdong 523863 (CN)
(72) Inventor: LI, Yuan, Dongguan, Guangdong 523863 (CN); PAN, Xiang, Dongguan, Guangdong 523863 (CN)
(74) Representative: Walaski, Jan Filip
(86) International application number: PCT/CN2024/110423
(87) International publication number: WO 2025/031404

(57) **Abstract**

This application discloses a method and apparatus for selecting sidelink resources, and a terminal, and belongs to the field of wireless communications. The method for selecting sidelink resources in embodiments of this application includes: A medium access control (Medium Access Control, MAC) layer of a terminal obtains a target indication of a first protocol layer, where the target indication indicates the MAC layer to create a sidelink grant for transmission of a sidelink positioning reference signal (SideLink-Positioning Reference Signal, SL-PRS). A target sidelink process corresponding to the transmission of the SL-PRS is determined according to the target indication, and a target sidelink grant is created for the target sidelink process. A resource is selected for the target sidelink grant, where the target sidelink grant is a sidelink grant created for the transmission of the SL-PRS.

## Description

### CROSS-REFERENCE TO RELATED APPLICATIONS

This application claims priority to Chinese Patent Application No. 202311011532.0, entitled "METHOD AND APPARATUS FOR SELECTING SIDELINK RESOURCES, AND TERMINAL" and filed with the National Intellectual Property Administration, PRC on August 10, 2023, which is incorporated herein by reference in its entirety.

### TECHNICAL FIELD

This application belongs to the technical field of wire communications, and particularly relates to a method and apparatus for selecting sidelink resources, and a terminal.

### BACKGROUND

In the related technology, for a sidelink (SideLink, SL) transmission, only a scenario in which sidelink data is available for transmitting in a logical channel is currently discussed. If the sidelink transmission is related to a sidelink positioning reference signal (SideLink-Positioning Reference Signal, SL-PRS), and for an SL-PRS transmission scenario, how to specifically implement a process related to sidelink resource selection or SL-PRS transmission needs to be resolved.

### SUMMARY

Embodiments of this application provide a method and apparatus for selecting sidelink resources, and a terminal, to provide a technical solution of specifically implementing resource selection for SL-PRS transmission or SL-PRS transmission.

According to a first aspect, a method for selecting sidelink resources is provided, including: A medium access control (Medium Access Control, MAC) layer of a terminal obtains a target indication of a first protocol layer, where the target indication indicates the MAC layer to create a sidelink grant for transmission of an SL-PRS. A target sidelink process corresponding to the transmission of the SL-PRS is determined according to the target indication, and a target sidelink grant is created for the target sidelink process. A resource is selected for the target sidelink grant, where the target sidelink grant is a sidelink grant created for the transmission of the SL-PRS.

According to a second aspect, a method for transmitting a sidelink positioning reference signal is provided. The method includes: An MAC layer of a terminal obtains a target sidelink grant. The MAC layer of the terminal transmits an SL-PRS using the target sidelink grant.

According to a third aspect, an apparatus for selecting sidelink resources is provided, including: a first obtaining module, configured to obtain a target indication of a first protocol layer, where the target indication indicates an MAC layer to create a sidelink grant for transmission of an SL-PRS; a determining module, configured to determine, according to the target indication, a target sidelink process corresponding to the transmission of the SL-PRS, and create a target sidelink grant for the target sidelink process; and a selection module, configured to select a resource for the target sidelink grant, where the target sidelink grant is a sidelink grant created for the transmission of the SL-PRS.

According to a fourth aspect, an apparatus for transmitting a sidelink positioning reference signal is provided, including: a second obtaining module, configured to obtain a target sidelink grant; and a transmission module, configured to transmit an SL-PRS using the target sidelink grant.

According to a fifth aspect, a terminal is provided. The terminal includes a processor and a memory. The memory stores a program or instruction runnable on the processor. The program or instruction, when executed by the processor, implements steps of the method according to the first aspect, or implements steps of the method according to the second aspect.

According to a sixth aspect, a terminal is provided, including a processor and a communication interface. The processor is configured to implement steps of the method according to the first aspect, or implement steps of the method according to the second aspect. The communication interface is configured to communicate with an external device.

According to a seventh aspect, a readable storage medium is provided. The readable storage medium stores a program or instruction. The program or instruction, when executed by a processor, implements steps of the method according to the first aspect or implements steps of the method according to the second aspect.

According to an eighth aspect, a chip is provided. The chip includes a processor and a communication interface. The communication interface is coupled to the processor. The processor is configured to run a program or instruction, to implement steps of the method according to the first aspect or implement steps of the method according to the second aspect.

According to a ninth aspect, a computer program/program product is provided. The computer program/program product is stored in a storage medium. The computer program/program product is executed by at least one processor, to implement steps of the method according to the first aspect or implement steps of the method according to the second aspect.

In embodiments of this application, an MAC layer of a terminal determines, in a case that a first protocol layer indicates the MAC layer to create a sidelink grant for transmission of an SL-PRS, a target sidelink process corresponding to the transmission of the SL-PRS, creates a target sidelink grant for the target sidelink process, and then selects a resource for the target sidelink grant, so that the terminal autonomously selects a resource for the transmission of the SL-PRS.

### BRIEF DESCRIPTION OF THE DRAWINGS

FIG. 1 shows a block diagram of a wireless communication system to which embodiments of this application may be applied;
FIG. 2 shows a schematic flowchart of a method for selecting sidelink resources according to embodiments of this application;
FIG. 3 shows another schematic flowchart of a method for selecting sidelink resources according to embodiments of this application;
FIG. 4 shows a schematic flowchart of a method for transmitting a sidelink positioning reference signal according to embodiments of this application;
FIG. 5 shows a diagram of a structure of an apparatus for selecting sidelink resources according to embodiments of this application;
FIG. 6 shows a diagram of a structure of an apparatus for transmitting a sidelink positioning reference signal according to embodiments of this application;
FIG. 7 shows a diagram of a structure of a communication device according to embodiments of this application; and
FIG. 8 shows a diagram of a hardware structure of a terminal according to embodiments of this application.

### DETAILED DESCRIPTION

The following clearly describes the technical solutions in embodiments of this application with reference to the accompanying drawings in embodiments of this application. Apparently, the described embodiments are some of embodiments of this application rather than all of embodiments. All other embodiments obtained by a person of ordinary skill in the art based on embodiments of this application fall within the protection scope of this application.

In this application, the terms "first" and "second" are used for distinguishing similar objects, but are not used for describing a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions: solution 1 in which A is included but B is not included; solution 2 in which B is included but A is not included; and solution 3 in which both A and B are included. The character "/" in this specification generally indicates an "or" relationship between the associated objects.

The term "indication" in this application may be either a direct indication (or an explicit indication) or an indirect indication (or an implicit indication). The direct indication may be understood as that a transmitter clearly informs a receiver of specific information, operations to be performed, request results, or the like in the transmitted indication. The indirect indication may be understood as that the receiver determines the corresponding information according to the indication transmitted by the transmitter, or makes a judgment and determines operations to be performed, request results, or the like according to the judgment result.

It should be noted that the technology described in embodiments of this application is not limited to a long term evolution (Long Term Evolution, LTE)/LTE-advanced (LTE-Advanced, LTE-A) system, and may alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in embodiments of this application are often used interchangeably, and the described technology may be applied to the systems and radio technologies mentioned above, and may alternatively be applied to other systems and radio technologies. The following description describes a new radio (New Radio, NR) system for illustration, and NR terminology is used in most of the following descriptions. However, these technologies may alternatively be applied to systems other than the NR system, such as 6th generation (6th Generation, 6G) communication systems.

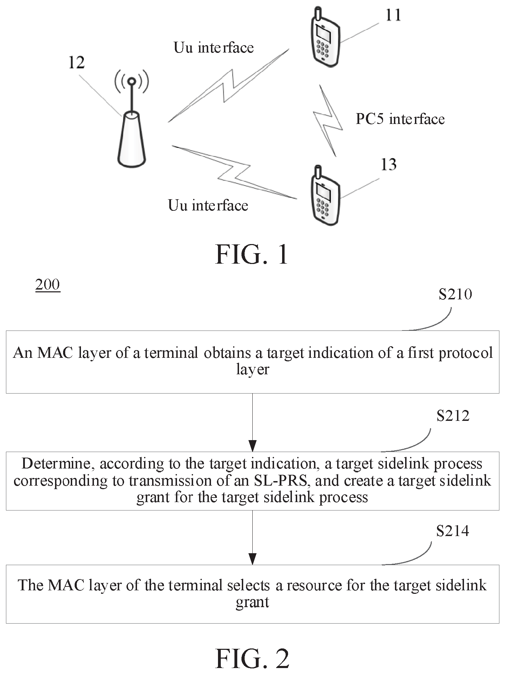

FIG. 1 shows a block diagram of a wireless communication system to which embodiments of this application may be applied. The wireless communication system includes a relay terminal 11, a network side device 12, and a remote terminal 13. In embodiments of this application, the remote terminal 13 communicates with the relay terminal 11 through a PC5 (secondary link or sidelink) interface. The relay terminal 11 communicates with the network side device 12 through a Uu interface.

The relay terminal 11 may alternatively be referred to as a relay (relay) terminal or a relay user equipment (User Equipment, UE). The remote terminal 13 may alternatively be referred to as a remote terminal or a remote (remote) UE. The relay terminal 11 and the remote terminal 13 may be terminal side devices such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or a vehicle user equipment (VUE), and a pedestrian user equipment (PUE). The wearable device includes: a smart bracelet, a smart earphone, smart glasses, and the like. It should be noted that specific types of the relay terminal 11 and the remote terminal 13 are not limited in embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another proper term in the field. Provided that the same technical effect is achieved, the base station is not limited to a specific technical vocabulary. It should be noted that, in embodiments of this application, only a base station in an NR system is used as an example for description, and a specific type of the base station is not limited.

In the related technology, a sidelink communication supports two resource allocation modes. In mode (mode) 1, a base station allocates an SL resource for a terminal. In mode 2, the terminal automatically selects an SL resource from a resource pool (resource pool), and information about the resource pool may be from a dedicated signaling message, a broadcast message, or pre-configured information of the base station.

If a UE is in an RRC connected state, an SL resource allocation mode may be determined by the base station to be mode1 or mode2. If the UE is within network coverage but is in an RRC non-connected state, or the UE is out of network coverage, the SL resource allocation mode can only be mode2.

For mode2, a specific procedure in which the terminal performs resource selection/re-selection for a sidelink transmission process is as follows:
1) A radio resource control (Radio Resource Control, RRC) layer receives an SL configuration, and transmits a related parameter to an MAC layer and a Physical layer (Physical, PHY).
2) After receiving an SL data transmitting requirement, the MAC layer creates an SL grant (grant).
3) The MAC layer selects an appropriate resource pool for SL data.
4) The MAC layer determines transmitting resource selection/re-selection.
5) If resource selection/re-selection is triggered, the MAC determines an SL transmitting parameter (e.g., a repeat count of a hybrid automatic repeat request (Hybrid Automatic Repeat Request, HARQ) and a frequency domain resource), and triggers the PHY layer to determine a candidate resource set. If resource selection/re-selection is not triggered, the previously selected/reserved SL grant is reused, and the procedure skips to step 8.
6) The PHY layer determines a resource selection window and a transmitting window (sensing window) according to RRC and MAC indications, determines a candidate resource set based on a reference signal received power (Reference Signal Received Power, RSRP) threshold (threshold) and a channel occupancy ratio (Channel Occupancy Ratio, CR) limit (limit), and feeds back to the MAC layer.
7) The MAC layer randomly selects a transmission resource from the candidate resource set.
8) The MAC layer determines time domain parameters of a physical sidelink control channel (Physical SideLink Control Channel, PSCCH) and a physical sidelink shared channel (Physical SideLink Shared Channel, PSSCH).
9) The MAC layer determines a PSSCH transmitting parameter (e.g., a modulation and coding scheme (Modulation and Coding Scheme, MCS) or an HARQ process identifier process ID).

In the related technology, an SL channel busy ratio (Channel Busy Ratio, CBR) is a value of a quantity of sub-channels (sub-channels) that have an SL received signal strength indication (Received Signal Strength Indication, RSSI) greater than a (pre) configured threshold within a range of a CBR measurement window [n-a, n-1] to a total quantity of sub-channels within the range [n-a, n-1] when measured by the UE at a slot (slot) n. a= 100 or 100·2µ slots, which may be configured by RRC.

If the network configures a mapping relationship between a CBR range and an optional range of SL PSSCH transmitting parameters, the MAC layer of the UE needs to determine the SL PSSCH transmitting parameters based on a CBR measurement value. If the CBR measurement value cannot be obtained, the SL PSSCH transmitting parameters are determined based on a default optional range of SL PSSCH transmitting parameters.

SL CR is a value obtained by dividing, by a UE PHY layer, the sum of the quantity of sub-channels that have been transmitted by the UE within a range of slots [n-a, n-1] + the quantity of sub-channels that have been reserved/indicated by the UE within a range of slot [n, n+b] by the total quantity of sub-channels within the range of [n-a, n+b].

The UE PHY layer transmits a PSSCH at slot n, and the UE needs to ensure Σ*_{i≥k} CR*(*i*) ≤*CR_{Limit}*(*k*), as obtained by measurement at slot n, where *CR(i)* is a CR, which is evaluated at slot n-N, of a PSSCH having a priority of i, and *CR_{Limit}(k)* is an SL CR limit threshold having a priority of k that is configured by a high layer.

In the related technology, for each piece of sidelink control information (Sidelink Control Information, SCI) corresponding to a new transmission, the MAC layer of the terminal performs multiplexing according to the following operations:

### 1. Destination Address Selection

If the network configures a resource pool (resource pool) for a sidelink discovery (sidelink discovery) service, and an SL grant associated with SCI corresponding to a new transmission belongs to the side discovery resource pool, the terminal selects a logical channel having at least one MAC control element (Control Element, CE) and a highest priority from logical channels meeting conditions, and the logical channel is associated with the sidelink discovery service. The terminal uses a destination address of the selected logical channel as a destination of this transmission. If the SL grant associated with the SCI corresponding to the new transmission does not belong to the sidelink discovery resource pool (e.g., the SL grant associated with the SCI belongs to a sidelink communication (sidelink communication) resource pool), the terminal selects a logical channel having at least one MAC CE and a highest priority from logical channels meeting conditions, and the logical channel is associated with one of broadcast/multicast/unicast in the sidelink communication service, and the terminal uses a destination address of the selected logical channel as a destination of this transmission. If the network is not configured with a resource pool for a sidelink discovery (sidelink discovery) service, the terminal selects a logical channel having at least one MAC CE and a highest priority from logical channels meeting conditions, and the logical channel is associated with one of broadcast/multicast/unicast in the sidelink discovery service or the sidelink communications service. The terminal uses a destination address of the selected logical channel as a destination address of this transmission.

The meaning of the logical channels meeting the conditions is:
Sidelink data or an MAC CE is available for transmission.

SBj>0 (a variable maintained by the terminal and used for logical channel prioritization (Logical Channel Prioritization, LCP)).

If the SL grant is a configured grant type 1 (Configured Grant Type 1), the logical channel is configured to be allowed to use the Configured Grant Type 1.

If the logical channel is configured with a configured grant list allowed to be used, the list should include a configured grant index associated to the SL grant.

If a physical sidelink feed back channel (Physical Sidelink Feed Back Channel, PSFCH) is not configured for the SL grant related to the SCI, the logical channel is configured to have an HARQ feedback disabled.

### 2. Logical Channel Selection

From all logical channels belonging to a selected destination, a logical channel meeting all of the following conditions is selected:
Sidelink data is available for transmission.

SBj>0 (a variable maintained by the terminal and used for LCP).

If the SL grant is a configured grant type 1 (Configured Grant Type 1), the logical channel is configured to be allowed to use the Configured Grant Type 1.

If the logical channel is configured with a configured grant list allowed to be used, the list should include a configured grant index associated to the SL grant.

If a PSFCH is configured for the SL grant related to SCI and the terminal has a capability of receiving a PSFCH feedback:

If sl-HARQ-FeedbackEnabled is set to be enabled for a highest-priority logical channel meeting the foregoing condition, sl-HARQ-FeedbackEnabled of the logical channel is set to be enabled; or

If sl-HARQ-FeedbackEnabled is set to be disabled for a highest-priority logical channel meeting the foregoing condition, sl-HARQ-FeedbackEnabled of the logical channel is set to be disabled.

If a PSFCH is not configured for the SL grant related to SCI or the terminal does not have a capability of receiving a PSFCH feedback, sl-HARQ-FeedbackEnabled is set to be disabled.

### 3. Sidelink Resource Allocation for Logical Channel

Before each logical channel prioritization (Logical Channel Prioritization, LCP) process, the terminal adds a sidelink prioritized bit rate (sidelink Prioritized Bit Rate, sPBR) × T to SBj for logical channel j, where T is an elapsed time since SBj is last added. If a value of SBj is greater than a sidelink bucket size sidelink bucket size, namely sPBR×sBSD (sidelink bucket size duration), SBj is set to the sidelink bucket size.

The MAC layer of the terminal allocates resources for the selected logical channels in descending order of priority. If the sPBR of the logical channel is set to infinity, before the sPBR of a lower-priority logical channel is met, an MAC entity allocates a resource for all data available for transmission on the logical channel.

The size of a to-be-transmitted MAC SDU and the size of an MAC subheader are reduced for the SBj of logical channel j.

If there are still remaining resources, all selected logical channels (regardless of the value of SBj) are served according to a strict descending order of priority until data of the logical channel or an SL grant is exhausted. Logical channels having the same priority should be served equally.

The priorities of the logical channels should be determined according to the following order:
- data from a sidelink control channel SCCH;
- Sidelink CSI Reporting MAC CE;
- Sidelink Inter-UE Coordination Request MAC CE and Sidelink Inter-UE Coordination Information MAC CE;
- Sidelink DRX Command MAC CE; and
- data from a sidelink traffic channel (Sidelink Traffic Channel, STCH).

It can be learned that the current resource selection/re-selection and logical channel multiplexing are designed only from the perspective of transmitting sidelink data. A technical solution of selecting a resource pool related to transmission of the SL-PRS or transmitting the SL-PRS is not provided. In view of the problem, embodiments of this application provide a method and apparatus for selecting sidelink resources, and a terminal.

The technical solutions according to embodiments of this application are described in detail below through some embodiments and application scenarios thereof with reference to the accompanying drawings.

FIG. 2 shows a schematic flowchart of a transmission method according to embodiments of this application. The method 200 may be performed by a terminal. In other words, the method may be performed by software or hardware installed in the terminal. As shown in FIG. 2, the method may include the following steps.

S210: An MAC layer of a terminal obtains a target indication of a first protocol layer.

In embodiments of this application, the target indication indicates the MAC layer to create a sidelink grant for transmission of an SL-PRS.

In embodiments of this application, the MAC layer may obtain the foregoing target indication from a sidelink positioning protocol (Sidelink Positioning Protocol, SLPP) layer. For example, the foregoing target indication may be carried in an SLPP message, and the SLPP message carrying the target indication is transmitted to the MAC layer. Alternatively, the MAC layer may automatically determine the target indication. For example, the MAC layer may carry the target indication in an MAC control element (Control Element, CE). Alternatively, the MAC layer may obtain the foregoing target indication from a physical (PHY) layer. For example, the foregoing target indication may be carried in SCI.

S212: Determine, according to the target indication, a target sidelink process corresponding to the transmission of the SL-PRS, and create a target sidelink grant for the target sidelink process.

According to the target indication, if the MAC layer of the terminal determines that the SL-PRS needs available for transmission, a target sidelink process corresponding to the transmission of the SL-PRS is determined, and a target sidelink grant is created for the target sidelink.

In embodiments of this application, the target sidelink grant is a sidelink grant created for the transmission of the SL-PRS.

S214: The MAC layer of the terminal selects a resource for the target sidelink grant.

In embodiments of this application, an MAC layer of a terminal determines, in a case that a first protocol layer indicates the MAC layer to create a sidelink grant for transmission of an SL-PRS, a target sidelink process corresponding to the transmission of the SL-PRS, creates a target sidelink grant for the target sidelink process, and then selects a resource for the target sidelink grant, so that the terminal autonomously selects a resource for the transmission of the SL-PRS.

In an optional implementation, in S214, that the MAC layer of the terminal selects the resource for the target sidelink grant may include that: the MAC layer of the terminal selects, in a case that the MAC layer of the terminal does not select the resource, the resource for the target sidelink grant from a resource pool within a target resource pool range, where the target resource pool range includes one of the following:
a first resource pool range, where resource pools within the first resource pool range include a dedicated resource pool dedicated to the transmission of the SL-PRS;
a second resource pool range, where resource pools within the second resource pool range include a shared resource pool for transmitting the SL-PRS and a sidelink shared channel (Sidelink Shared Channel, SL-SCH); and
a third resource pool range, where resource pools within the third resource pool range include a dedicated resource pool dedicated to the transmission of the SL-PRS and a shared resource pool for transmitting the SL-PRS and the SL-SCH.

In the foregoing implementation, the MAC layer of the terminal selects, in a case that the MAC layer of the terminal does not select a resource, a resource for the target sidelink grant from a resource pool within a target resource pool range, to obtain a resource for the transmission of the SL-PRS.

In the foregoing implementation, optionally, that the MAC layer of the terminal selects, in a case that the terminal is configured with the resource pools within the first resource pool range, the resource for the target sidelink grant from the resource pool within the target resource pool range may include that: the MAC layer of the terminal selects the resource for the target sidelink grant from any resource pool within the first resource pool range. In a case that the terminal is configured with resource pools within the first resource pool range, it indicates that the terminal is configured with a dedicated resource pool dedicated to the transmission of the SL-PRS. Therefore, the terminal may select the resource for the target sidelink grant from any resource pool within the first resource pool range.

In the foregoing implementation, optionally, that the MAC layer of the terminal selects, in a case that the terminal is configured with the resource pools within the first resource pool range, the resource for the target sidelink grant from the resource pool within the target resource pool range may include that: the MAC layer of the terminal selects, in a case that the terminal is configured with the resource pools within the third resource pool range and the terminal receives first preference information from a network side device, the resource for the target sidelink grant from any resource pool within the first resource pool range, where the first preference information indicates the terminal to preferentially use a dedicated resource pool dedicated to the transmission of the SL-PRS in a case that a resource is selected for the target sidelink grant. In this optional implementation, in a case that the terminal is configured with the resource pools within the third resource pool range, and the network side device transmits, to the terminal, the first preference information for indicating the terminal to preferentially use a dedicated resource dedicated to the transmission of the SL-PRS when selecting a resource for the target sidelink grant, the MAC layer of the terminal may select the resource for the target sidelink grant from any resource pool within the first resource pool range.

In the foregoing implementation, optionally, that the MAC layer of the terminal selects, in a case that the terminal is not configured with the resource within the first resource pool range, the resource for the target sidelink grant from the resource pool within the target resource range may include one of the following: the MAC layer of the terminal selects the resource for the target sidelink grant from any resource pool within the third resource pool range. In this optional implementation, since the terminal is not configured with the resource within the first resource pool range, the terminal may select the resource for the target sidelink grant from any resource pool within the third resource pool range.

In the foregoing implementation, optionally, the MAC layer of the terminal selects, in a case that the terminal is not configured with the resource within the first resource pool range, and if the terminal is configured with the resource pools within the third resource pool range and the terminal receives second preference information from a network side device, the resource for the target sidelink grant from any resource pool within the second resource pool range, where the second preference information indicates the terminal to preferentially use a shared resource pool for transmitting the SL-PRS and the SL-SCH when a resource is selected for the target sidelink grant. In this optional implementation, in a case that the terminal is configured with the resource pools within the third resource pool range, and the network side device transmits, to the terminal, the second preference information indicating the terminal to preferentially use a shared resource pool for transmitting the SL-PRS and the SL-SCH when a resource is selected for the target sidelink grant, the MAC layer of the terminal may select the resource for the target sidelink grant from any resource pool within the second resource pool range.

In an optional implementation, that the MAC layer of the terminal selects, in a case that the terminal is configured with the resource pools within the third resource pool range, the resource for the target sidelink grant from the resource pool within the target resource range may include that: the MAC layer of the terminal selects the resource for the target sidelink grant from any resource pool within the third resource pool range.

In embodiments of this application, when the MAC layer of the terminal selects the resource for the target sidelink grant, if the MAC layer does not currently select the resource in the third resource pool range, the MAC layer of the terminal may select the resource for the target sidelink grant according to one of the following:
(1) The terminal selects a resource from any resource pool belonging to the first resource pool range if resource pools in the first resource pool range are configured.
(2) The terminal selects a resource from any resource pool belonging to the second resource pool range if resource pools in the first resource pool range are not configured.
(3) The terminal selects a resource from any resource pool belonging to the third resource pool range.
(4) The terminal receives preference information from the network side device, where the preference information indicates type preference information for selecting, by the terminal, a resource pool from the third resource pool range, and the type preference information may indicate that the terminal preferentially selects a resource from the resource pools belonging to the first resource pool range. The terminal selects a resource from the resource pools based on the first information.

In one or more optional implementations, the MAC layer of the terminal may select a resource pool from a selected resource pool range (i.e., any one of the first resource pool range, the second resource pool range, and the third resource pool range) based on a CBR measurement of each resource pool. For example, the MAC layer of the terminal selects a resource for the target sidelink grant from a resource pool that has a smallest CBR measurement result in the selected resource pool range. Alternatively, the MAC layer of the terminal selects a resource for the target sidelink grant from a resource pool that has a CBR measurement result lower than a CBR threshold in the selected resource pool range, where the CBR threshold is a CBR threshold indicated by the network side device. If the CBR measurements of a plurality of resource pools within the selected resource pool range cannot be obtained or the CBR measurements of all the resource pools are greater than or equal to the CBR threshold, the terminal may select a resource from any resource pool within the selected resource pool range.

In embodiments of this application, when the MAC layer of the terminal selects a resource for the target sidelink grant, if the MAC layer currently selects any resource pool in the third resource pool range, the terminal may still select a resource for the target sidelink grant from the selected resource pool.

In an optional implementation, after the MAC layer of the terminal selects the resource for the target sidelink grant, the method may further include that: the MAC layer of the terminal performs transmitting resource selection or re-selection check in a resource pool in which the selected resource is located. By performing transmitting resource selection or re-selection check, whether a bandwidth of a selected SL grant can meet a bandwidth or delay requirement for the transmission of the SL-PRS may be determined.

Optionally, in the foregoing implementation, the MAC layer of the terminal performs, in a case that it is determined, through the transmitting resource selection or re-selection check, that the resource selected for the target sidelink grant does not meet a bandwidth requirement or a delay requirement for the transmission of the SL-PRS, transmitting resource re-selection for the target sidelink grant. According to this optional implementation, in a case that the resource selected for the target sidelink grant does not meet the bandwidth requirement or the delay requirement for the transmission of the SL-PRS, transmitting resource re-selection may be triggered, to select a suitable resource for the target sidelink grant to ensure the transmission of the SL-PRS.

Optionally, in a case that the transmitting resource selection or re-selection check triggers resource re-selection, the method may further include the following steps:
Step 1: The MAC layer of the terminal determines first resource information based on first information.
Step 2: The MAC layer of the terminal selects a sidelink resource for the SL-PRS based on the first resource information.

According to the foregoing implementation, in a case that the transmitting resource selection or re-selection check triggers resource re-selection, the first resource information may be determined based on the first information, and then the sidelink resource is selected for the SL-PRS based on the first resource information, thereby ensuring the transmission of the SL-PRS.

In the foregoing implementation, optionally, the first information includes at least one of the following:
(1) a CBR measurement result of a resource pool in which the selected resource is located, for example, a resource pool CBR result measured by a PHY layer;
(2) a priority of the transmission of the SL-PRS; and
(3) configuration information of a radio resource control (Radio Resource Control, RRC) layer from a network device.

In the foregoing implementation, optionally, the first resource information includes at least one of the following:
(1) a frequency domain position of the SL-PRS;
(2) a frequency domain bandwidth of the SL-PRS;
(3) a time domain start position of the SL-PRS;
(4) a time domain repetition count of the SL-PRS;
(5) a resource identifier of the SL-PRS; and
(6) a hybrid automatic repeat request (Hybrid Automatic Repeat Request, HARQ) count corresponding to the target sidelink data.

In an optional implementation, after the MAC layer of the terminal selects the resource for the target sidelink grant, the method may further include that: the terminal transmits the SL-PRS using the resource selected or re-selected for the target sidelink grant. According to this implementation, the terminal transmits the SL-PRS using the resource selected or re-selected for the target sidelink grant, thereby ensuring successful transmission of the SL-PRS.

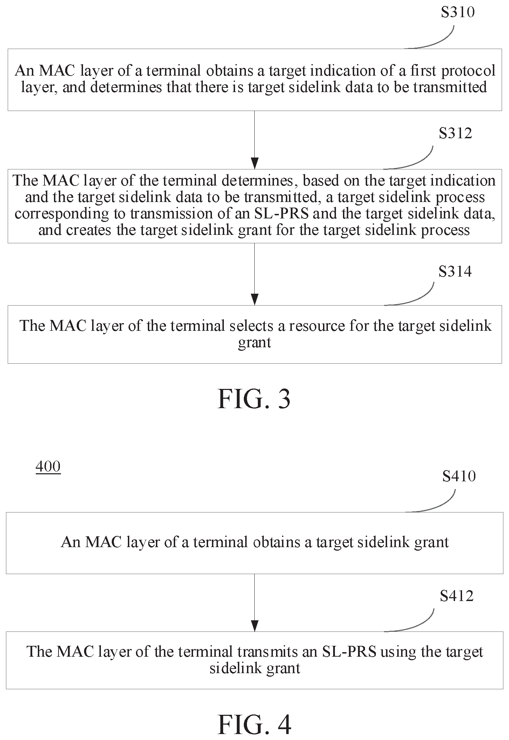

In an optional implementation, when the MAC layer of the terminal receives the foregoing target indication, there may be target sidelink data available for transmission. For example, the MAC layer of the terminal receives one or more MAC service data units (Service Data Unit, SDU) from a radio link control (Radio Link Control, RLC) layer or the MAC layer needs to transmit one or more MAC CEs. Therefore, the MAC layer of the terminal further needs to select a resource for the transmission of the target sidelink data. Therefore, embodiments of this application further provide another optional method for selecting sidelink resources. As shown in FIG. 3, the method mainly includes the following steps.

S310: An MAC layer of a terminal obtains a target indication of a first protocol layer, and determines that there is target sidelink data available for transmission.

For example, the MAC layer of the terminal receives the target indication from the first protocol layer, and the MAC layer of the terminal receives one or more MAC SDUs from an RLC layer or the MAC layer needs to transmit one or more MAC CEs. The target indication indicates the MAC layer to create an SL grant for transmission of an SL-PRS. The first protocol layer may be one of the following: an SLPP sidelink positioning protocol layer, an MAC layer, and a PHY layer.

S312: The MAC layer of the terminal determines, based on the target indication and the target sidelink data available for transmission, a target sidelink process corresponding to the transmission of the SL-PRS and the target sidelink data, and creates the target sidelink grant for the target sidelink process.

In embodiments of this application, since the SL-PRS and the target sidelink data need available for transmission, the MAC layer of the terminal determines the target sidelink process corresponding to the transmission of the SL-PRS and the target sidelink data, and creates the target sidelink grant for the target sidelink. The target sidelink grant is a sidelink grant created for the transmission of the SL-PRS and the target sidelink data.

S314: The MAC layer of the terminal selects a resource for the target sidelink grant.

According to the technical solutions provided in embodiments of this application, when the terminal has the SL-PRS and the target sidelink data available for transmission, a resource may be selected for the transmission of the SL-PRS and the target sidelink data, to implement the transmission of the SL-PRS and the target sidelink data.

In an optional implementation, that the MAC layer of the terminal selects the resource for the target sidelink grant may include that: the MAC layer of the terminal selects, in a case that the terminal is configured with resource pools within the second resource pool range and the MAC layer of the terminal does not select a resource within the second resource pool range, the resource for the target sidelink grant from any resource pool within the second resource pool range, where the resource pools within the second resource pool range include a shared resource pool for transmitting the SL-PRS and the SL-SCH.

In the foregoing implementation, if the terminal is configured with resource pools in the second resource pool range and the MAC layer does not select a resource in the second resource pool range, the MAC layer of the terminal may select, from any resource pool within the second resource pool range, the resource for the transmission of the SL-PRS and the target sidelink data.

In an optional implementation, that the MAC layer of the terminal determines, based on the target indication and the target sidelink data available for transmission, the target sidelink process corresponding to the transmission of the SL-PRS and the target sidelink data, and creates the target sidelink grant for the target sidelink process may include: determining, in a case that the terminal is not configured with resource pools within the second resource pool range, a first sidelink process corresponding to the transmission of the SL-PRS according to the target indication, creating a first sidelink grant for the first sidelink process, and determining, based on target sidelink data available for transmission, that the transmission of the target sidelink data corresponds to a second sidelink process, and creating a second sidelink grant for the second sidelink process, where the target sidelink process includes the first sidelink process and the second sidelink process, and the target sidelink grant includes the first sidelink grant and the second sidelink grant. In this implementation, since the terminal is not configured with the resource pools within the second resource pool range, the terminal cannot select a resource for simultaneously transmitting the SL-PRS and the target sidelink data. Therefore, the terminal separately determines the first sidelink process corresponding to the transmission of the SL-PRS and the second sidelink process corresponding to the transmission of the target sidelink data, creates the first sidelink grant for the first sidelink process, and creates the second sidelink grant for the second sidelink process.

In the foregoing implementation, that the MAC layer of the terminal selects a resource for the target sidelink grant includes that: the MAC layer of the terminal selects a resource for the first sidelink grant from any resource pool within the first resource range, where the resource pools within the first resource pool range include a dedicated resource pool dedicated to the transmission of the SL-PRS. The second sidelink grant may be performed by a method for creating a sidelink grant for transmission of sidelink data in the related technology. Specifically, this is not limited in embodiments of this application.

In one or more implementations, the MAC layer of the terminal may select the resource for the first sidelink grant from a resource pool having a CBR measurement result lower than a second CBR threshold within the selected resource pool range (e.g., the first resource pool range and the second resource pool range), where the second CBR threshold is a CBR threshold indicated by the network side device. Alternatively, the MAC layer of the terminal selects the resource for the first sidelink grant from a resource pool that has a smallest CBR measurement result in the selected resource pool range.

In embodiments of this application, the MAC layer of the terminal receives a first indication from the first protocol layer, and the MAC layer of the terminal receives sidelink data (e.g., one or more MAC SDUs from an RLC layer or the MAC layer needs to transmit one or more MAC CEs). The first indication indicates the MAC layer to create an SL grant for transmission of an SL-PRS. The first protocol layer may be one of the following: an SLPP sidelink positioning protocol layer, an MAC layer, and an RRC layer. If the terminal is configured as mode2 autonomous resource selection mode, the MAC layer of the terminal determines, according to the first indication, to create a first SL grant for the transmission of the SL-PRS and the sidelink data. The MAC layer of the terminal may select a resource for the transmission of the SL-PRS and the sidelink data in the following manner:
1. If the terminal is configured with resource pools in the second resource pool range:
   (1) If an MAC entity does not select a resource in the second resource pool range, a behavior of the terminal includes one of the following:
      1) A resource is selected from any resource pool belonging to the second resource pool range.
      2) The terminal receives first information from the network side device. The first information indicates the terminal to select CBR threshold information of a resource pool type from the second resource pool range. In a case that the terminal supports measurement of CBRs of a plurality of resource pools, the terminal selects, based on the first information, a resource from any resource pool belonging to a resource pool range having CBR measurement lower than the CBR threshold. If the CBR measurements of the plurality of resource pools cannot be obtained or the CBR measurements of all the resource pools are greater than or equal to the CBR threshold, the terminal selects a resource from any resource pool belonging to the second resource pool range.
      3) The terminal selects a resource pool from the second resource pool range based on the CBR measurement of the resource pool. Specifically, the terminal measures a CBR of a resource pool belonging to the second resource pool range, and performs sorting in ascending order of the CBR measurement results. The terminal selects a resource from a resource pool with a smallest CBR measurement result.
   (2) If the MAC entity has selected a resource in the second resource pool range, the terminal still selects a resource from the selected resource pool.
2. If the terminal is not configured with resource pools in the second resource pool range, the behavior of the terminal includes one of the following:
   (1) The terminal selects a resource for the transmission of the SL-PRS associated with the first SL grant in any resource pool belonging to the first resource pool range, and creates a second SL grant for the transmission of the sidelink data.
   (2) The terminal selects a resource pool from the first resource pool range based on the CBR measurement of the resource pool. Specifically, the terminal measures a CBR of a resource pool belonging to the first resource pool range, and performs sorting in ascending order of the CBR measurement results. The terminal selects a resource for the transmission of the SL-PRS associated with the first SL grant from a resource pool with a smallest CBR measurement result. The terminal creates a second SL grant for the transmission of the sidelink data.

In an optional implementation, after the MAC layer of the terminal selects the resource for the target sidelink grant, the method may further include that: the MAC layer of the terminal performs transmitting resource selection or re-selection check in a resource pool in which the selected resource is located.

Optionally, in the foregoing implementation, the MAC layer of the terminal performs, in a case that it is determined, by performing transmitting resource selection or re-selection check, that the resource selected for the target sidelink grant does not meet a bandwidth requirement or a delay requirement for the transmission of the SL-PRS, transmitting resource re-selection for the target sidelink grant. According to this optional implementation, in a case that the resource selected for the target sidelink grant does not meet the bandwidth requirement or the delay requirement for the transmission of the SL-PRS, transmitting resource re-selection may be triggered, to select a suitable resource for the target sidelink grant to ensure the transmission of the SL-PRS.

Optionally, in a case that the transmitting resource selection or re-selection check triggers resource re-selection, the method may further include the following steps:
Step 1: The MAC layer of the terminal determines first resource information based on first information.
Step 2: The MAC layer of the terminal selects a sidelink resource for the SL-PRS based on the first resource information.

According to the foregoing implementation, in a case that the transmitting resource selection or re-selection check triggers resource re-selection, the first resource information may be determined based on the first information, and then the sidelink resource is selected for the SL-PRS based on the first resource information, thereby ensuring the transmission of the SL-PRS.

In the foregoing implementation, optionally, the first information includes at least one of the following:
(1) a CBR measurement result of a resource pool in which the selected resource is located, for example, a resource pool CBR result measured by a PHY layer;
(2) a priority of the transmission of the SL-PRS; and
(3) configuration information of a radio resource control (Radio Resource Control, RRC) layer from a network device.

In the foregoing implementation, optionally, the first resource information includes at least one of the following:
1) a frequency domain position of the SL-PRS;
2) a frequency domain bandwidth of the SL-PRS;
3) a time domain start position of the SL-PRS;
4) a time domain repetition count of the SL-PRS;
5) a resource identifier of the SL-PRS; and
6) a hybrid automatic repeat request (Hybrid Automatic Repeat Request, HARQ) count corresponding to the target sidelink data.

In an optional implementation, after the MAC layer of the terminal selects the resource for the target sidelink grant, the method may further include that: the MAC layer of the terminal transmits the SL-PRS and the target sidelink data using the resource selected or re-selected for the target sidelink grant. According to this implementation, the terminal transmits the SL-PRS and the target sidelink data using the resource selected or re-selected for the target sidelink grant, thereby ensuring successful transmission of the SL-PRS.

According to the technical solutions provided in embodiments of this application, for a resource selection procedure related to the transmission of the SL-PRS, a resource selection procedure is separately defined for different resource pool types, to ensure efficient resource utilization.

Embodiments of this application further provide a method for transmitting a sidelink positioning reference signal.

FIG. 4 shows a schematic flowchart of a method for transmitting a sidelink positioning reference signal according to embodiments of this application. The method 400 may be performed by a terminal. As shown in FIG. 4, the method mainly includes the following steps.

S410: An MAC layer of a terminal obtains a target sidelink grant.

In embodiments of this application, the target resources corresponding to the target sidelink grant are resources autonomously selected by the terminal, or the target resources corresponding to the target sidelink grant are resources allocated by a network side device.

S412: The MAC layer of the terminal transmits an SL-PRS using the target sidelink grant.

According to the technical solutions provided in embodiments of this application, the MAC layer of the terminal may transmit the SL-PRS using the target sidelink grant, thereby implementing the transmission of the SL-PRS.

In an optional implementation, the target sidelink grant may be a target link grant created by the MAC layer of the terminal for the transmission of the SL-PRS.

In an optional implementation, in a case that the target sidelink grant may be a target link grant created by the MAC layer of the terminal for the transmission of the SL-PRS, that the MAC layer of the terminal transmits the SL-PRS using the target sidelink grant may include the following steps:
Step 1: The MAC layer of the terminal selects a first destination address related to the transmission of the SL-PRS, and allocates a first resource for the transmission of the SL-PRS in target resources corresponding to the target sidelink grant.
Step 2: The MAC layer of the terminal transmits the SL-PRS through the first resource.

In the foregoing optional implementation, optionally, if the target sidelink grant belongs to a first resource pool, the MAC layer of the terminal may select a destination related to the transmission of the SL-PRS and use the SL grant for the transmission of the SL-PRS. The first resource pool has at least one of the following features: including SL-PRS resources, and excluding PSSCH resources.

Optionally, the target resources corresponding to the target sidelink grant may belong to a target resource pool, and the target resource pool includes SL-PRS resources and includes PSSCH resources.

In an optional implementation, after the first resource is allocated for the transmission of the SL-PRS in a case that the target resources corresponding to the target sidelink grant belong to the target resource pool, the method may further include the following steps:
Step 1: In a case that there are remaining target resources corresponding to the target sidelink grant and target sidelink data having a destination address belonging to the first destination address is available for transmitting, a first object is selected, based on a first condition, from a first candidate range in which the destination address belongs to the first destination address, and a second resource is allocated for transmission of the target sidelink data in the first object in descending order of priority of the first object.
Step 2: The MAC layer of the terminal transmits the target sidelink data in the first object through the second resource.

In the foregoing implementation, in a case that the transmission of the SL-PRS occurs in a resource pool shared with SL communication, since the transmission of the SL-PRS is delay sensitive, the SL-PRS may be preferentially considered for selection of a transmission destination address and resource allocation. If there are still remaining resources for a transmission opportunity, data in logical channels of the same destination address may further be multiplexed, thereby improving transmission efficiency.

In an optional implementation, the target sidelink grant is a sidelink grant created for the transmission of the SL-PRS and the transmission of the target sidelink data. For example, in the method shown in FIG. 3, the MAC layer of the terminal receives a first indication from the first protocol layer, and the MAC layer of the terminal receives one or more MAC SDUs from the RLC layer or the MAC layer needs to transmit one or more MAC CEs. Therefore, the MAC layer of the terminal may create the target sidelink grant for the transmission of the SL-PRS and the transmission of the target sidelink data.

In an optional implementation, that the MAC layer of the terminal transmits, in a case that the target sidelink grant is a sidelink grant created for the transmission of the SL-PRS and the transmission of target sidelink data, the SL-PRS using the target sidelink grant may include the following steps:
Step 1: The MAC layer of the terminal selects a first destination address related to the transmission of the SL-PRS, and selects, based on a first condition, a first object in a first candidate range in which a destination address belongs to the first destination address.
Step 2: The MAC layer of the terminal allocates a first resource for the transmission of the SL-PRS in target resources corresponding to the target sidelink grant, and then allocates a second resource for transmission of sidelink data in the first object in descending order of priority of the first object.
Step 3: The MAC layer of the terminal transmits the SL-PRS through the first resource, and transmits the target sidelink data through the second resource.

In the foregoing implementation, the target sidelink grant may belong to a target resource pool, and the target resource pool includes SL-PRS resources and includes PSSCH resources.

In the foregoing implementation, in a case that both the SL-PRS and the target sidelink data need available for transmission, the MAC layer of the terminal selects the first destination address related to the transmission of the SL-PRS, and then selects, based on the first condition, the first object in the first candidate range in which a destination address belongs to the first destination address. First, resources are allocated for the transmission of the SL-PRS. Then, resources are allocated to the SL data of the first object in descending order of priority of the first object, and finally, transmission corresponding to the SL grant is formed, to ensure that the SL-PRS is preferentially transmitted.

In the foregoing implementation, the first candidate range may include: a sidelink logical channel corresponding to sidelink data transmission in which a destination address belongs to the first destination address.

Optionally, the first condition includes:
(1) Sidelink data is available for transmitting.
(2) SBj>0, where SBj is a variable that is maintained by the terminal and used for a logical channel prioritization LCP.
(3) In a case that the target sidelink grant is a configured grant type 1, the sidelink logical channel is configured to allow to use the grant type 1.
(4) In a case that the sidelink logical channel is configured with a configured grant list allowed to be used, the configured grant list includes a configured grant index associated to the target sidelink grant.

In another optional implementation, that the MAC layer of the terminal transmits, in a case that the target sidelink grant is a sidelink grant created for the transmission of the SL-PRS and the transmission of target sidelink data, the SL-PRS using the target sidelink grant may include the following steps:
Step 1: The MAC layer of the terminal selects a second destination address, and selects, based on a second condition, a second object in a second candidate range in which a destination address belongs to the second destination address, where the second destination address is a destination address related to a highest priority in the transmission of the SL-PRS and the transmission of the target sidelink data.
Step 2: The MAC layer of the terminal allocates a resource for the transmission corresponding to the second object in descending order of priority of the second object.
Step 3: The MAC layer of the terminal transmits transmission content corresponding to the second object through the resource allocated for the second object.

In the foregoing optional implementation, the terminal does not distinguish a transmission type, selects the second destination address related to a highest transmission priority, then selects, based on the second condition, the second object from the second candidate range belonging to the second destination address, finally allocates the resources in descending order of priority of the second object, and finally forms a transmission corresponding to an SL grant, thereby ensuring that a transmission having a highest priority is transmitted first.

Optionally, the second candidate range may include the transmission of the SL-PRS and a sidelink logical channel corresponding to the transmission of the sidelink data, which belong to the second destination address.

Optionally, the second condition meets at least one of the following:
(1) a bandwidth of the SL-PRS is less than or equal to a bandwidth of a resource pool in which the target sidelink grant is located;
(2) an SL-PRS transmission delay requirement is higher than a predetermined value; and
(3) a logical channel corresponding to the transmission of the sidelink data meets a third condition.

Optionally, the third condition meets:
1) sidelink data is available for transmitting;
2) SBj>0, where SBj is a variable that is maintained by the terminal and used for a logical channel prioritization LCP;
3) in a case that the target sidelink grant is a configured grant type 1, the logical channel is configured to allow to use the grant type 1; and
4) in a case that the logical channel is configured with a configured grant list allowed to be used, the configured grant list includes a configured grant index associated to the target sidelink grant.

In one or more implementations, the method may further include the following steps:
Step 1: The MAC layer of the terminal generates a target SCI according to second information, where the target SCI indicates transmission of the SL-PRS and the target sidelink data, and the second information includes at least one of the following:
a resource position corresponding to the transmission;
a propagation mode corresponding to the transmission;
a source address identifier of the transmission;
a destination address identifier of the transmission; and
indication information indicating whether the transmission includes the sidelink data.

In the foregoing implementation, the MAC layer of the terminal may generate the target SCI, so that a receiving end may determine the transmission of the SL-PRS and the target sidelink data according to the target SCI.

According to the foregoing method provided in embodiments of this application, when a sidelink grant is related to the transmission of the SL-PRS, a resource allocation manner is improved, and in a case that there are remaining resources, data multiplexing is allowed, thereby improving transmission efficiency.

The method for selecting sidelink resources according to embodiments of this application may be performed by an apparatus for selecting sidelink resources. An apparatus for selecting sidelink resources according to embodiments of this application is described in embodiments of this application by using an example in which the apparatus for selecting sidelink resources performs the method for selecting sidelink resources.

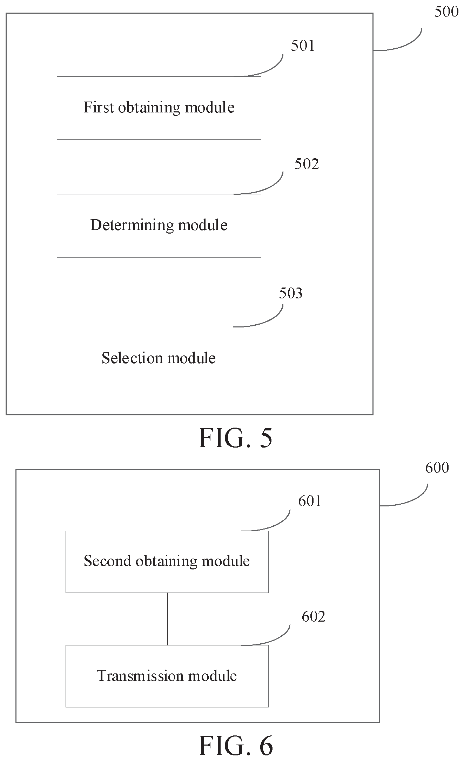

FIG. 5 shows a diagram of a structure of an apparatus for selecting sidelink resources according to embodiments of this application. As shown in FIG. 5, the apparatus 500 mainly includes a first obtaining module 501, a determining module 502, and a selection module 503.

In embodiments of this application, the first obtaining module 501 is configured to obtain a target indication of a first protocol layer, where the target indication indicates an MAC layer to create a sidelink grant for transmission of a sidelink positioning reference signal SL-PRS. The determining module 502 is configured to determine, according to the target indication, a target sidelink process corresponding to the transmission of the SL-PRS, and create a target sidelink grant for the target sidelink process. The selection module 503 is configured to select a resource for the target sidelink grant, where the target sidelink grant is a sidelink grant created for the transmission of the SL-PRS.

In an implementation, the first protocol layer includes at least one of the following:
an SLPP layer, where the target indication is carried in an SLPP message;
an MAC layer, where the target indication is carried in an MAC control element CE; and
a PHY layer, where the target indication is carried in sidelink control information SCI.

In an implementation, the selecting the resource for the target sidelink grant includes:
selecting, in a case that a resource is not selected, a resource for the target sidelink grant from a resource pool within a target resource pool range, where the target resource pool range includes one of the following:
a first resource pool range, where resource pools within the first resource pool range include a dedicated resource pool dedicated to the transmission of the SL-PRS;
a second resource pool range, where resource pools within the second resource pool range include a shared resource pool for transmitting the SL-PRS and an SL-SCH; and
a third resource pool range, where resource pools within the third resource pool range include a dedicated resource pool dedicated to the transmission of the SL-PRS and a shared resource pool for transmitting the SL-PRS and the SL-SCH.

In an implementation, the terminal to which the apparatus belongs is configured with resource pools within the first resource pool range. The selecting the resource for the target sidelink grant from the resource pool within the target resource pool range includes one of the following:
selecting a resource for the target sidelink grant from any resource pool within the first resource pool range; and
selecting, in a case that the terminal is configured with resource pools within the third resource pool range and receives first preference information from a network side device, a resource for the target sidelink grant from any resource pool within the first resource pool range.

The first preference information indicates the terminal to preferentially use a dedicated resource pool dedicated to the transmission of the SL-PRS in a case that a resource is selected for the target sidelink grant.

In an implementation, the terminal to which the apparatus belongs is not configured with a resource within the first resource pool range. The selecting the resource for the target sidelink grant from the resource pool within the target resource range includes one of the following:
selecting a resource for the target sidelink grant from any resource pool within the third resource pool range; and
selecting, in a case that the terminal is configured with resource pools within the third resource pool range and receives second preference information from a network side device, a resource for the target sidelink grant from any resource pool within the second resource pool range.

The second preference information indicates the terminal to preferentially use a shared resource pool for transmitting the SL-PRS and the sidelink shared channel SL-SCH in a case that a resource is selected for the target sidelink grant.

In an implementation, the terminal to which the apparatus belongs is configured with resource pools within the third resource pool range. The selecting the resource for the target sidelink grant from the resource pool within the target resource range includes:
selecting a resource for the target sidelink grant from any resource pool within the third resource pool range.

In an implementation, the selection module 503 is further configured to perform, after the resource is selected for the target sidelink grant, transmitting resource selection or re-selection check in a resource pool in which the selected resource is located.

In an implementation, the selection module 503 is further configured to perform, in a case that it is determined, through transmitting resource selection or re-selection check, that the resource selected for the target sidelink grant does not meet a bandwidth requirement or a delay requirement for the transmission of the SL-PRS, transmitting resource re-selection for the target sidelink grant.

In an implementation, the selection module 503 is further configured to transmit the SL-PRS using the resource selected or re-selected for the target sidelink grant.

In an implementation, the determining module 502 is further configured to determine that there is target sidelink data available for transmission. The determining, by the determining module 502, the target sidelink process corresponding to the transmission of the SL-PRS and creating the target sidelink grant for the target sidelink process includes: determining, based on the target indication and the target sidelink data available for transmission, a target sidelink process corresponding to the transmission of the SL-PRS and the target sidelink data, and creating the target sidelink grant for the target sidelink process.

In an implementation, the selecting the resource for the target sidelink grant includes:
selecting, in a case that the terminal to which the apparatus belongs is configured with resource pools within the second resource pool range and does not select a resource within the second resource pool range, a resource for the target sidelink grant from any resource pool within the second resource pool range.

The resource pools within the second resource pool range include a shared resource pool for transmitting the SL-PRS and the SL-SCH.

In an implementation, the determining, by the determining module 502 based on the target indication and the target sidelink data available for transmission, the target sidelink process corresponding to the transmission of the SL-PRS and the target sidelink data and creating the target sidelink grant for the target sidelink process includes:

determining, in a case that resource pools within the second resource pool range are not configured, a first sidelink process corresponding to the transmission of the SL-PRS according to the target indication, creating a first sidelink grant for the first sidelink process, and determining, based on target sidelink data available for transmission, that the transmission of the target sidelink data corresponds to a second sidelink process, and creating a second sidelink grant for the second sidelink process, where the target sidelink process includes the first sidelink process and the second sidelink process, and the target sidelink grant includes the first sidelink grant and the second sidelink grant.

The selecting, by the selection module 503, the resource for the target sidelink grant includes: selecting a resource for the first sidelink grant from any resource pool within the first resource range, where the resource pools within the first resource pool range include a dedicated resource pool dedicated to the transmission of the SL-PRS.

In an implementation, the selection module 503 is further configured to perform, after the resource is selected for the target sidelink grant, transmitting resource selection or re-selection check in a resource pool in which the selected resource is located.

In an implementation, the selection module 503 is further configured to perform, in a case that it is determined, by performing transmitting resource selection or re-selection check, that the resource selected for the target sidelink grant does not meet a bandwidth requirement or a delay requirement for the transmission of the SL-PRS, transmitting resource re-selection for the target sidelink grant.

In an implementation, the determining module 502 is further configured to determine, in a case that the transmitting resource selection or re-selection check triggers resource re-selection, first resource information based on the first information. The selection module 503 is further configured to select the sidelink resource for the SL-PRS based on the first resource information.

In an implementation, the first information includes at least one of the following:
a CBR measurement result of a resource pool in which the selected resource is located;
a priority of the transmission of the SL-PRS; and
configuration information of a radio resource control RRC layer from a network device.

In an implementation, the first resource information includes at least one of the following:
a frequency domain position of the SL-PRS;
a frequency domain bandwidth of the SL-PRS;
a time domain start position of the SL-PRS;
a time domain repetition count of the SL-PRS;
a resource identifier of the SL-PRS; and
a hybrid automatic repeat request HARQ count corresponding to the target sidelink data.

In an implementation, a transmission module is further included. The transmission module is configured to transmit the SL-PRS and the target sidelink data using the resource selected or re-selected for the target sidelink grant.

The apparatus for selecting sidelink resources in embodiments of this application may be an electronic device, for example, an electronic device having an operating system, or a component in an electronic device, for example, an integrated circuit or a chip. The electronic device may be a terminal, or may be another device other than a terminal. By way of example, the terminal may include, but is not limited to, the types of the terminal 11 listed above, and the another device may be a server, a network attached storage (Network Attached Storage, NAS), or the like. This is not specifically limited in embodiments of this application.

The apparatus for selecting sidelink resources according to embodiments of this application can implement all processes implemented by the MAC layer of the terminal in the method embodiments in FIG. 2 to FIG. 3, and the same technical effects are achieved. Details are not described herein again to avoid repetition.

FIG. 6 shows a diagram of a structure of an apparatus for transmitting a sidelink positioning reference signal according to embodiments of this application. As shown in FIG. 6, the apparatus 600 mainly includes a second obtaining module 601 and a transmission module 602.

In embodiments of this application, the second obtaining module 601 is configured to obtain a target sidelink grant. The transmission module 602 is configured to transmit an SL-PRS using the target sidelink grant.

In an implementation, the target sidelink grant is a sidelink grant created for the transmission of the SL-PRS.

In an implementation, the transmitting the SL-PRS using the target sidelink grant includes:
selecting a first destination address related to the transmission of the SL-PRS, and allocating a first resource for the transmission of the SL-PRS in target resources corresponding to the target sidelink grant; and
transmitting the SL-PRS through the first resource.

In an implementation, the target resources corresponding to the target sidelink grant belong to a target resource pool, and the target resource pool includes SL-PRS resources and includes PSSCH resources.

In an implementation, the transmission module 602 is further configured to:
select, after the first resource is allocated for the transmission of the SL-PRS, in a case that there are remaining target resources corresponding to the target sidelink grant and target sidelink data having a destination address belonging to the first destination address is available for transmitting, a first object in a first candidate range in which the destination address belongs to the first destination address based on a first condition, and allocate a second resource for transmission of the target sidelink data in the first object in descending order of priority of the first object; and
transmit the target sidelink data in the first object through the second resource.

In an implementation, the target sidelink grant is a sidelink grant created for the transmission of the SL-PRS and the transmission of the target sidelink data.

In an implementation, the transmitting the SL-PRS using the target sidelink grant includes:
selecting a first destination address related to the transmission of the SL-PRS, and selecting, based on a first condition, a first object in a first candidate range in which a destination address belongs to the first destination address;
allocating a first resource for the transmission of the SL-PRS in target resources corresponding to the target sidelink grant, and then allocating a second resource for transmission of sidelink data in the first object in descending order of priority of the first object; and
transmitting the SL-PRS through the first resource, and transmitting the target sidelink data through the second resource.

In an implementation, the first candidate range includes: a sidelink logical channel corresponding to sidelink data transmission in which a destination address belongs to the first destination address.

In an implementation, the first condition includes:
sidelink data is available for transmitting;
SBj>0, where SBj is a variable that is maintained by the terminal and used for a logical channel prioritization LCP;
in a case that the target sidelink grant is a configured grant type 1, the sidelink logical channel is configured to allow to use the grant type 1; and
in a case that the sidelink logical channel is configured with a configured grant list allowed to be used, the configured grant list includes a configured grant index associated to the target sidelink grant.

In an implementation, the transmitting the SL-PRS using the target sidelink grant includes:
selecting a second destination address, and selecting, based on a second condition, a second object in a second candidate range in which a destination address belongs to the second destination address, where the second destination address is a destination address related to a highest priority in the transmission of the SL-PRS and the transmission of the target sidelink data;
allocating a resource for the transmission corresponding to the second object in descending order of priority of the second object; and
transmitting transmission content corresponding to the second object through the resource allocated for the second object.

In an implementation, the second candidate range includes the transmission of the SL-PRS and a sidelink logical channel corresponding to the transmission of the sidelink data, which belong to the second destination address.

In an implementation, the second condition meets at least one of the following:
a bandwidth of the SL-PRS is less than or equal to a bandwidth of a resource pool in which the target sidelink grant is located;
an SL-PRS transmission delay requirement is higher than a predetermined value; and
a logical channel corresponding to the transmission of the sidelink data meets a third condition.

In an implementation, the third condition meets:
sidelink data is available for transmitting;
SBj>0, where SBj is a variable that is maintained by the terminal and used for a logical channel prioritization LCP;
in a case that the target sidelink grant is a configured grant type 1, the logical channel is configured to allow to use the grant type 1; and
in a case that the logical channel is configured with a configured grant list allowed to be used, the configured grant list includes a configured grant index associated to the target sidelink grant.

In an implementation, a generation module is further included. The generation module is configured to generate a target SCI based on second information, where the target SCI is used for indicating transmission of the SL-PRS and the target sidelink data, and the second information includes at least one of the following:
a resource position corresponding to the transmission;
a propagation mode corresponding to the transmission;
a source address identifier of the transmission;
a destination address identifier of the transmission; and
indication information indicating whether the transmission includes the sidelink data.

In an implementation, the target resources corresponding to the target sidelink grant are resources autonomously selected by the terminal, or the target resources corresponding to the target sidelink grant are resources allocated by a network side device.

The apparatus for transmitting a sidelink positioning reference signal in embodiments of this application may be an electronic device, for example, an electronic device having an operating system, or a component in an electronic device, for example, an integrated circuit or a chip. The electronic device may be a terminal, or may be another device other than a terminal. By way of example, the terminal may include, but is not limited to, the types of the terminal 11 listed above, and the another device may be a server, a network attached storage (Network Attached Storage, NAS), or the like. This is not specifically limited in embodiments of this application.

The apparatus for selecting sidelink resources according to embodiments of this application can implement all processes implemented by the MAC layer of the terminal in the method embodiments in FIG. 4, and the same technical effects are achieved. Details are not described herein again to avoid repetition.

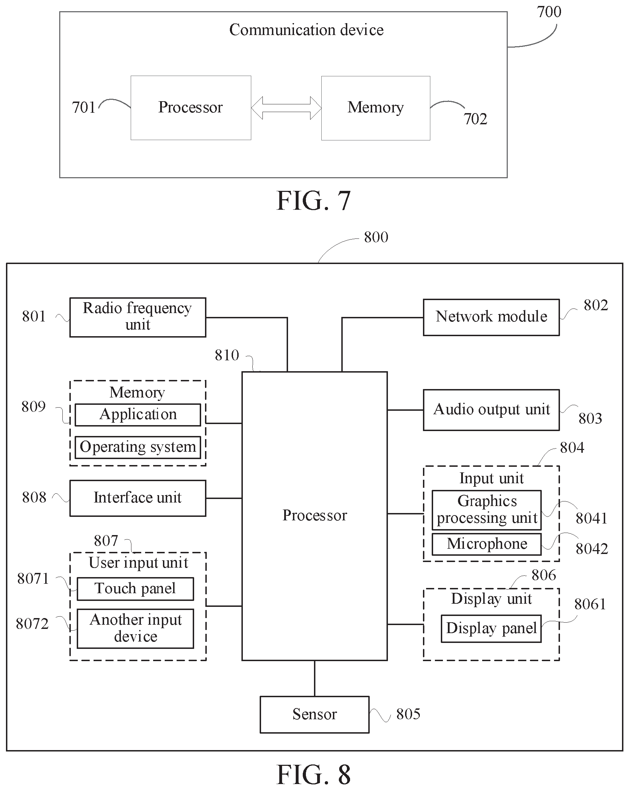

As shown in FIG. 7, embodiments of this application further provide a communication device 700, including a processor 701 and a memory 702. The memory 702 stores a program or instruction runnable on the processor 701. For example, when the communication device 700 is a terminal, the program or instruction, when executed by the processor 701, implements various steps of the foregoing embodiments of the method for selecting sidelink resources or implements various steps of the foregoing embodiments of the method for transmitting a sidelink positioning reference signal, and the same technical effects are achieved. Details are not described herein again to avoid repetition.

Embodiments of this application further provide a terminal, including a processor and a communication interface. The communication interface is coupled to the processor. The processor is configured to execute a program or instruction, to implement the steps in the method embodiments shown in FIG. 2 to FIG. 4. The terminal embodiments correspond to the foregoing method embodiments on a terminal side. Implementation processes and implementations of the foregoing method embodiments all may be applied to the terminal embodiment, and the same technical effects can be achieved. Specifically, FIG. 8 is a diagram of a hardware structure of a terminal for implementing an embodiment of this application.

The terminal 800 includes, but is not limited to, at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (e.g., a battery) that supplies power to the components. The power supply may be logically connected to the processor 810 through a power management system, thereby implementing functions such as management of charging, discharging, and power consumption through the power management system. The terminal structure shown in FIG. 8 constitutes no limitation on the terminal. The terminal may include more or fewer components than those shown in the figure, or some merged components, or different component arrangements. Details are not described herein again.

It should be understood that, in embodiments of this application, the input unit 804 may include a graphics processing unit (Graphics Processing Unit, GPU) 8041 and a microphone 8042. The graphics processing unit 8041 processes image data of a still picture or a video obtained by an image capture apparatus (e.g., a camera) in a video capture mode or an image capture mode. The display unit 806 may include a display panel 8061. The display panel 8061 may be configured by using a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include, but is not limited to, a physical keyboard, a functional key (e.g., a volume control key or a switch key), a track ball, a mouse, and a joystick. Details are not described herein again.

In embodiments of this application, the radio frequency unit 801 receives downlink data from a network side device and may then transmit the data to the processor 810 for processing. In addition, the radio frequency unit 801 may transmit uplink data to the network side device. Generally, the radio frequency unit 801 includes, but is not limited to, an antenna, an amplifier, a transceiver, a coupler, a low noise amplifier, a duplexer, and the like.

The memory 809 may be configured to store a software program or instruction and various data. The memory 809 may mainly include a first storage region for storing a program or instruction and a second storage region for storing data. The first storage region may store an operating system, an application program or instruction required by at least one function (e.g., a sound playback function and an image playback function), or the like. Furthermore, the memory 809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 809 in embodiments of this application includes but is not limited to these memories and any other memory of a suitable type.

The processor 810 may include one or more processing units. Optionally, the processor 810 integrates an application processor and a modem processor. The application processor mainly processes operations involving an operating system, a user interface, an application, and the like. The modem processor mainly processes a wireless communication signal, and is, for example, a baseband processor. It may be understood that the foregoing modem processor may not be integrated into the processor 810.

The processor 810 is configured to:
obtain a target indication of a first protocol layer, where the target indication indicates an MAC layer to create a sidelink grant for transmission of a sidelink positioning reference signal (SL-PRS);
determine, according to the target indication, a target sidelink process corresponding to the transmission of the SL-PRS, and create a target sidelink grant for the target sidelink process; and
select a resource for the target sidelink grant.

The target sidelink grant is a sidelink grant created for the transmission of the SL-PRS.

Alternatively, the processor 810 is configured to obtain a target sidelink grant.

The radio frequency unit 801 is configured to transmit an SL-PRS using the target sidelink grant.

It may be understood that for the implementation processes of the implementations mentioned in this embodiment, refer to related descriptions for the method embodiments 888, and the same or corresponding technical effects are achieved. Details are not described herein again to avoid repetition.

Embodiments of this application further provide a readable storage medium. The readable storage medium stores a program or instruction. The program or instruction, when executed by a processor, implements various steps of the foregoing embodiments of the method for selecting sidelink resources, or implements various steps of the foregoing embodiments of the method for transmitting a sidelink positioning reference signal, and the same technical effects can be achieved. Details are not described herein again to avoid repetition.

The processor is a processor of the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transient readable storage medium.

Embodiments of this application further provide a chip. The chip includes a processor and a communication interface. The communication interface is coupled to the processor. The processor is configured to run a program or instruction, to implement various steps of the foregoing embodiments of the method for selecting sidelink resources, or implement various steps of the foregoing embodiments of the method for transmitting a sidelink positioning reference signal, and the same technical effects can be achieved. Details are not described herein again to avoid repetition.

It should be understood that the chip mentioned in embodiments of this application may alternatively be referred to as a system level chip, a system chip, a chip system, a system on chip, or the like.

Embodiments of this application further provide a computer program/program product. The computer program/program product is stored in a storage medium. The computer program/program product is executed by at least one processor to implement various steps of the foregoing embodiments of the method for selecting sidelink resources, or implement various steps of the foregoing embodiments of the method for transmitting a sidelink positioning reference signal, and the same technical effects can be achieved. Details are not described herein again to avoid repetition.

It should be noted that in this specification, the term "include", "comprise", or any other variants thereof are intended to encompass in a non-exclusive manner, so that a process, method, object, or apparatus including a series of elements not only includes those elements, but also includes other elements that are not explicitly listed, or elements that are inherent to such a process, method, object, or apparatus. Without more limitations, an element defined by a sentence "including a ..." does not exclude a case that there are still other same elements in the process, method, object, or apparatus including the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may further be added, omitted, or combined. In addition, features described with reference to some examples may be combined in other examples.

Through the description of the foregoing implementations, a person skilled in the art may clearly understand that the methods according to the foregoing embodiments may be implemented by a computer software product and a necessary general hardware platform, and certainly, may alternatively be implemented by hardware. The computer software product is stored in a storage medium (e.g., a ROM, a RAM, a magnetic disk, or an optical disc) and includes several instructions for instructing a terminal or a network side device to perform the methods described in embodiments of this application.

Embodiments of this application are described above with reference to the accompanying drawings. However, this application is not limited to the foregoing specific implementations, and the foregoing specific implementations are only illustrative and not restrictive. A person of ordinary skill in the art may make implementations in many forms under the teaching of this application without departing from the spirit of this application and the protection scope of the claims. These implementations fall within the protection scope of this application.

## Claims

1. A method for transmitting a sidelink positioning reference signal, comprising:
obtaining, by an MAC layer of a terminal, a target sidelink grant; and
transmitting, by the MAC layer of the terminal, an SL-PRS using the target sidelink grant.

2. The method according to claim 1, wherein the target sidelink grant is a sidelink grant created for transmission of the SL-PRS.

3. The method according to claim 2, wherein the transmitting, by the MAC layer of the terminal, the SL-PRS using the target sidelink grant comprises:
selecting, by the MAC layer of the terminal, a first destination address related to the transmission of the SL-PRS, and allocating a first resource for the transmission of the SL-PRS in target resources corresponding to the target sidelink grant; and
transmitting, by the MAC layer of the terminal, the SL-PRS through the first resource.

4. The method according to claim 3, wherein the target resources corresponding to the target sidelink grant belong to a target resource pool, and the target resource pool comprises SL-PRS resources and comprises PSSCH resources.

5. The method according to claim 4, wherein after the allocating the first resource for the transmission of the SL-PRS, the method further comprises:
selecting, in a case that there are remaining target resources corresponding to the target sidelink grant and target sidelink data having a destination address belonging to the first destination address is available for transmitting, a first object in a first candidate range in which the destination address belongs to the first destination address based on a first condition, and allocating a second resource for transmission of the target sidelink data in the first object in descending order of priority of the first object; and
transmitting, by the MAC layer of the terminal, the target sidelink data in the first object through the second resource.

6. The method according to claim 1, wherein the target sidelink grant is a sidelink grant created for the transmission of the SL-PRS and the transmission of the target sidelink data.

7. The method according to claim 6, wherein the transmitting, by the MAC layer of the terminal, the SL-PRS using the target sidelink grant comprises:
selecting, by the MAC layer of the terminal, a first destination address related to the transmission of the SL-PRS, and selecting, based on a first condition, a first object in a first candidate range in which a destination address belongs to the first destination address;
allocating, by the MAC layer of the terminal, a first resource for the transmission of the SL-PRS in target resources corresponding to the target sidelink grant, and then allocating a second resource for transmission of sidelink data in the first object in descending order of priority of the first object; and
transmitting, by the MAC layer of the terminal, the SL-PRS through the first resource, and transmitting the target sidelink data through the second resource.

8. The method according to claim 5 or 7, wherein the first candidate range comprises a sidelink logical channel corresponding to the transmission of the sidelink data having the destination address belonging to the first destination address.

9. The method according to claim 8, wherein the first condition comprises:
sidelink data is available for transmitting;
SBj>0, wherein SBj is a variable that is maintained by the terminal and used for a logical channel prioritization LCP;
in a case that the target sidelink grant is a configured grant type 1, the sidelink logical channel is configured to allow to use the grant type 1; and
in a case that the sidelink logical channel is configured with a configured grant list allowed to be used, the configured grant list comprises a configured grant index associated to the target sidelink grant.

10. The method according to claim 6, wherein the transmitting, by the MAC layer of the terminal, the SL-PRS using the target sidelink grant comprises:
selecting, by the MAC layer of the terminal, a second destination address, and selecting, based on a second condition, a second object in a second candidate range in which a destination address belongs to the second destination address, wherein the second destination address is a destination address related to a highest priority in the transmission of the SL-PRS and the transmission of the target sidelink data;
allocating, by the MAC layer of the terminal, a resource for the transmission corresponding to the second object in descending order of priority of the second object; and
transmitting, by the MAC layer of the terminal, transmission content corresponding to the second object through the resource allocated for the second object.

11. The method according to claim 10, wherein the second candidate range comprises the transmission of the SL-PRS and a sidelink logical channel corresponding to the transmission of the sidelink data, which belong to the second destination address.

12. The method according to claim 11, wherein the second condition meets at least one of the following:
a bandwidth of the SL-PRS is less than or equal to a bandwidth of a resource pool in which the target sidelink grant is located;
an SL-PRS transmission delay requirement is higher than a predetermined value; and
a logical channel corresponding to the transmission of the sidelink data meets a third condition.

13. The method according to claim 12, wherein the third condition meets:
sidelink data is available for transmitting;
SBj>0, wherein SBj is a variable that is maintained by the terminal and used for a logical channel prioritization LCP;
in a case that the target sidelink grant is a configured grant type 1, the logical channel is configured to allow to use the grant type 1; and
in a case that the logical channel is configured with a configured grant list allowed to be used, the configured grant list comprises a configured grant index associated to the target sidelink grant.

14. The method according to any one of claims 5 to 13, further comprising:
generating, by the MAC layer of the terminal, a target SCI based on second information, wherein the target SCI indicates transmission of the SL-PRS and the target sidelink data, and the second information comprises at least one of the following:
a resource position corresponding to the transmission;
a propagation mode corresponding to the transmission;
a source address identifier of the transmission;
a destination address identifier of the transmission; and
indication information indicating whether the transmission comprises the sidelink data.

15. The method according to any one of claims 1 to 13, wherein the target resources corresponding to the target sidelink grant are resources autonomously selected by the terminal, or the target resources corresponding to the target sidelink grant are resources allocated by a network side device.

16. A method for selecting sidelink resources, comprising:
obtaining, by a medium access control MAC layer of a terminal, a target indication of a first protocol layer, wherein the target indication indicates the MAC layer to create a sidelink grant for transmission of a sidelink positioning reference signal SL-PRS;
determining, according to the target indication, a target sidelink process corresponding to the transmission of the SL-PRS, and creating a target sidelink grant for the target sidelink process; and
selecting, by the MAC layer of the terminal, a resource for the target sidelink grant,
wherein the target sidelink grant is a sidelink grant created for the transmission of the SL-PRS.

17. The method according to claim 16, wherein the first protocol layer comprises at least one of the following:
a sidelink positioning protocol (SLPP) layer, wherein the target indication is carried in an SLPP message;
an MAC layer, wherein the target indication is carried in an MAC control element (CE); and
a physical PHY layer, wherein the target indication is carried in sidelink control information SCI.

18. The method according to claim 16 or 17, wherein the selecting, by the MAC layer of a terminal, the resource for the target sidelink grant comprises:
selecting, by the MAC layer of the terminal in a case that the MAC layer of the terminal does not select a resource, a resource for the target sidelink grant from a resource pool within a target resource pool range, wherein the target resource pool range comprises one of the following:
a first resource pool range, wherein resource pools within the first resource pool range comprise a dedicated resource pool dedicated to the transmission of the SL-PRS;
a second resource pool range, wherein resource pools within the second resource pool range comprise a shared resource pool for transmitting the SL-PRS and a sidelink shared channel SL-SCH; and
a third resource pool range, wherein resource pools within the third resource pool range comprise a dedicated resource pool dedicated to the transmission of the SL-PRS and a shared resource pool for transmitting the SL-PRS and the SL-SCH.

19. The method according to claim 18, wherein the terminal is configured with resource pools within the first resource pool range, and the selecting, by the MAC layer of the terminal, the resource for the target sidelink grant from the resource pool within the target resource pool range comprises one of the following:
selecting, by the MAC layer of the terminal, a resource for the target sidelink grant from any resource pool within the first resource pool range; and
selecting, by the MAC layer of the terminal in a case that the terminal is configured with resource pools within the third resource pool range and the terminal receives first preference information from a network side device, a resource for the target sidelink grant from any resource pool within the first resource pool range, wherein
the first preference information indicates the terminal to preferentially use a dedicated resource pool dedicated to the transmission of the SL-PRS in a case that a resource is selected for the target sidelink grant.

20. The method according to claim 18, wherein the terminal is not configured with a resource within the first resource pool range, and the selecting, by the MAC layer of the terminal, the resource for the target sidelink grant from the resource pool within the target resource range comprises one of the following:
selecting, by the MAC layer of the terminal, a resource for the target sidelink grant from any resource pool within the third resource pool range; and
selecting, by the MAC layer of the terminal in a case that the terminal is configured with resource pools within the third resource pool range and the terminal receives second preference information from a network side device, a resource for the target sidelink grant from any resource pool within the second resource pool range, wherein
the second preference information indicates the terminal to preferentially use a shared resource pool for transmitting the SL-PRS and the SL-SCH in a case that a resource is selected for the target sidelink grant.

21. The method according to claim 18, wherein the terminal is configured with resource pools within the third resource pool range, and the selecting, by the MAC layer of the terminal, the resource for the target sidelink grant from the resource pool within the target resource range comprises:
selecting, by the MAC layer of the terminal, a resource for the target sidelink grant from any resource pool within the third resource pool range.

22. The method according to any one of claims 18 to 21, wherein after the selecting, by the MAC layer of the terminal, the resource for the target sidelink grant, the method further comprises:
performing, by the MAC layer of the terminal, transmitting resource selection or re-selection check in a resource pool in which the selected resource is located.

23. The method according to claim 22, further comprising:
performing, by the MAC layer of the terminal in a case that it is determined, through the transmitting resource selection or re-selection check, that the resource selected for the target sidelink grant does not meet a bandwidth requirement or a delay requirement for the transmission of the SL-PRS, transmitting resource re-selection for the target sidelink grant.

24. The method according to any one of claims 18 to 23, wherein after the selecting, by the MAC layer of the terminal, the resource for the target sidelink grant, the method further comprises:
transmitting, by the terminal, the SL-PRS using the resource selected or re-selected for the target sidelink grant.

25. The method according to claim 16 or 17, wherein
before the determining, according to the target indication, the target sidelink process corresponding to the transmission of the SL-PRS, and creating the target sidelink grant for the target sidelink process, the method further comprises: determining, by the MAC layer of the terminal, that there is target sidelink data available for transmission; and
the determining, according to the target indication, the target sidelink process corresponding to the transmission of the SL-PRS, and creating the target sidelink grant for the target sidelink process comprises: determining, by the MAC layer of the terminal according to the target indication and the target sidelink data available for transmission, a target sidelink process corresponding to the transmission of the SL-PRS and the target sidelink data, and creating the target sidelink grant for the target sidelink process.

26. The method according to claim 25, wherein the selecting, by the MAC layer of the terminal, the resource for the target sidelink grant comprises:
selecting, by the MAC layer of the terminal in a case that the terminal is configured with resource pools within the second resource pool range and the MAC layer of the terminal does not select a resource within the second resource pool range, a resource for the target sidelink grant from any resource pool within the second resource pool range, wherein
the resource pools within the second resource pool range comprise a shared resource pool for transmitting the SL-PRS and the SL-SCH.

27. The method according to claim 25, wherein
the determining, by the MAC layer of the terminal according to the target indication and the target sidelink data available for transmission, a target sidelink process corresponding to the transmission of the SL-PRS and the target sidelink data, and creating the target sidelink grant for the target sidelink process comprises:
determining, in a case that the terminal is not configured with resource pools within the second resource pool range, a first sidelink process corresponding to the transmission of the SL-PRS according to the target indication, creating a first sidelink grant for the first sidelink process, and determining, based on target sidelink data available for transmission, that the transmission of the target sidelink data corresponds to a second sidelink process, and creating a second sidelink grant for the second sidelink process, wherein the target sidelink process comprises the first sidelink process and the second sidelink process, and the target sidelink grant comprises the first sidelink grant and the second sidelink grant; and
the selecting, by the MAC layer of the terminal, the resource for the target sidelink grant comprises: selecting, by the MAC layer of the terminal, a resource for the first sidelink grant from any resource pool within the first resource range,
wherein the resource pools within the first resource pool range comprise a dedicated resource pool dedicated to the transmission of the SL-PRS.

28. The method according to any one of claims 25 to 27, wherein after the selecting, by the MAC layer of the terminal, the resource for the target sidelink grant, the method further comprises:
performing, by the MAC layer of the terminal, transmitting resource selection or re-selection check in a resource pool in which the selected resource is located.

29. The method according to claim 28, further comprising:
performing, by the MAC layer of the terminal in a case that it is determined, by performing transmitting resource selection or re-selection check, that the resource selected for the target sidelink grant does not meet a bandwidth requirement or a delay requirement for the transmission of the SL-PRS, transmitting resource re-selection for the target sidelink grant.

30. The method according to claim 23 or 29, further comprising:
determining, by the MAC layer of the terminal in a case that the transmitting resource selection or re-selection check triggers resource re-selection, first resource information based on first information; and
selecting, by the MAC layer of the terminal, a sidelink resource for the SL-PRS based on the first resource information.

31. The method according to claim 30, wherein the first information comprises at least one of the following:
a CBR measurement result of a resource pool in which the selected resource is located;
a priority of the transmission of the SL-PRS; and
configuration information of a radio resource control RRC layer from a network device.

32. The method according to claim 30, wherein the first resource information comprises at least one of the following:
a frequency domain position of the SL-PRS;
a frequency domain bandwidth of the SL-PRS;
a time domain start position of the SL-PRS;
a time domain repetition count of the SL-PRS;
a resource identifier of the SL-PRS; and
a hybrid automatic repeat request HARQ count corresponding to the target sidelink data.

33. The method according to any one of claims 25 to 32, wherein after the selecting, by the MAC layer of the terminal, the resource for the target sidelink grant, the method further comprises:
transmitting, by the MAC layer of the terminal, the SL-PRS and the target sidelink data using the resource selected or re-selected for the target sidelink grant.

34. An apparatus for transmitting a sidelink positioning reference signal, comprising:
a second obtaining module, configured to obtain a target sidelink grant; and
a transmission module, configured to transmit an SL-PRS using the target sidelink grant.

35. An apparatus for selecting sidelink resources, comprising:
a first obtaining module, configured to obtain a target indication of a first protocol layer, wherein the target indication indicates an MAC layer to create a sidelink grant for transmission of a sidelink positioning reference signal (SL-PRS);
a determining module, configured to determine, according to the target indication, a target sidelink process corresponding to the transmission of the SL-PRS, and create a target sidelink grant for the target sidelink process; and
a selection module, configured to select a resource for the target sidelink grant, wherein
the target sidelink grant is a sidelink grant created for the transmission of the SL-PRS.

36. A terminal, comprising a processor and a memory, wherein the memory stores a program or instruction runnable on the processor, and the program or instruction, when executed by the processor, implements steps of the method according to any one of claims 1 to 15 or 16 to 33.

37. A readable storage medium, storing a program or instruction, wherein the program or instruction, when executed by a processor, implements steps of the method according to any one of claims 1 to 15 or 16 to 33.
